# EUROPEAN PATENT APPLICATION

(11) **EP 4 744 494 A1**
(43) Date of publication of application: **20.05.2026**
(21) Application number: 24213299.1
(22) Date of filing: 15.11.2024
(51) Int. Cl.: A23B 2/00, A23B 2/08, A23L 5/10, A23L 5/30

(54) **AN APPARATUS FOR PASTEURIZING FOOD PRODUCTS**

(71) Applicant: Pavan S.p.A., 35015 Galliera Veneta (PD) (IT)
(72) Inventor: DI NUNNO, Davide, 31033 CASTELFRANCO VENETO (TREVISO) (IT); BERTONCELLO, Simone, 35015 GALLIERA VENETA (PADOVA) (IT); ZEN, Fabio, 35013 CITTADELLA (PADOVA) (IT); DEPAGNEUX, Bertrand Jean, 69400 VILLEFRANCHE SUR SAONE (FR); GARNAULT, Tristan, 69150 DECINES-CHARPIEU (FR); CURTO, Hugo Jean, 38280 VILLETTE D'ANTHON (FR)
(74) Representative: Dondi, Silvia

(57) **Abstract**

An apparatus (1) for pasteurizing food products, for example fresh pasta products, the apparatus (1) comprising:
- a tunnel structure (2) defining at least one cavity (3);
- a conveyor belt (4) for conveying the food products along a conveying direction (A-A) inside the cavity (3);
- at least a first group of microwave inlets (5a) and a second group of microwave inlets (5b), the two groups of microwave inlets (5a, 5b) being configured to emit microwave radiations within the cavity (3), each microwave inlet (5a, 5b) of the two groups comprising a slotted waveguide,
wherein all the microwave inlets (5a) of the first group are equally inclined with respect to the conveying direction (A-A) and all the microwave inlets (5b) of the second group are equally inclined with respect to the conveying direction (A-A) but differently inclined with respect to the microwave inlets (5a) of the first group.

## Description

The present invention relates to an apparatus for pasteurizing food products.

The proposed invention can be used for fresh pasta production.

For example, the invention is used for producing stuffed pasta, such as ravioli, cappelletti, tortellini, saccottini, fagottini, etc.

The present invention can also be used for producing long-type fresh pasta, such as spaghetti, linguine, bucatini, fettuccine, tagliatelle, etc.

The invention can also be used for producing short-type fresh pasta, such as penne, rigatoni, farfalle, gnocchi, etc.

Another field of application of the current invention is the production of edible snacks for animals.

As it is known, pasteurization is a thermal treatment which aims at reducing the bacterial load, in particular pathogenic microorganisms, so as to extend the shelf life of food products.

Pasteurization of doughs of fresh pasta is a well-established treatment in industrial pasta factories. The treatment involves heating fresh pasta at temperature not higher than 100°C for a pre-established time, for example between 3 and 5 minutes.

In the field of pasta production, pasteurizing apparatuses are known which use saturated steam at a temperature preferably between 80°C and 100°C.

The Italian patent application n. 102012902111397 discloses a pasteurizing tunnel wherein fresh pasta products advance by means of a conveyor belt. Fresh pasta products are subject to steam jets coming from perforated tubes arranged above and below the conveyor belt.

At the end of the path, food products undergo a drying step for achieving a higher surface stiffness and reducing gluing phenomena.

A main drawback of these solutions resides in the high amount of steam that needs to be generated, which requires high energy. In addition, condensation created in the process shall be extracted from the tunnel. Some solutions envisage a recovery circuit for the condensation. This results in increasing structural complexity and bulk.

In addition, only a reduced amount of steam is absorbed by the products. The remaining part of steam inside the tunnel is likely to be dispersed. In order to limit dispersion, some solutions propose heating chambers with a reduced volume or provide heating plates over the conveyor belt or a fan for sucking the steam in excess. This shall also be expelled, which poses issues of energy dissipation.

Another drawback of prior art solutions is related to difficulties in reaching a uniform treatment of pasta products. In fact, heating by steam jets generates a temperature increase from the outer surface to the inner core of the products. In order to assure uniform heating of the inner core of the products, treatment time needs to be prolonged, which means increasing the energy consumption.

It must also be noticed that long treatment times affect the integrity of stuffed pasta products, which tend to expand, open, and loose the filling. In addition, pasta is likely to be overcooked with respect to the filling.

Another limit lies in the difficulty of creating pasteurizing cycles where products are quickly heated or are subject to differential heating.

From document US 3,889,009 A it is known a method and apparatus for sterilizing food in a continuous process under a tunnel using microwave radiations.

In this context, the technical task at the basis of the present invention is to propose an apparatus for pasteurizing food products, which overcomes the drawbacks of the prior art cited above.

In particular, it is an object of the present invention to provide an apparatus for pasteurizing food products, which is less energy consuming than known solutions.

Another object of the present invention is to propose an apparatus for pasteurizing food products, which assures a more uniform and quicker treatment of the food products.

Another object of the present invention is to propose an apparatus for pasteurizing food products, which allows to gradually heat the products.

Another object of the present invention is to propose an apparatus for pasteurizing food products, in which falling of water condensation on the food products is prevented or limited.

Another object of the present invention is to propose an apparatus for pasteurizing food products in which it is prevented or limited the expansion and opening of the stuffed pasta products.

The stated technical task and specified aims are substantially achieved by an apparatus for pasteurizing food products, for example fresh pasta products, the apparatus comprising:
- a tunnel structure defining at least one cavity;
- a conveyor belt for conveying the food products along a conveying direction inside the cavity;
- at least a first group of microwave inlets and a second group of microwave inlets, the two groups of microwave inlets being configured to emit microwave radiations within the cavity.

Advantageously, all the microwave inlets of the first group are equally inclined with respect to the conveying direction and all the microwave inlets of the second group are equally inclined with respect to the conveying direction but differently inclined with respect to the microwave inlets of the first group.

According to one aspect of the invention, each microwave inlet of the two groups comprises a slotted waveguide.

The tunnel structure comprises an upper cover, a bottom and two lateral walls.

In particular, the upper cover comprises two inclined pitches, each forming an angle of at least 15° with respect to a horizontal ground.

Advantageously, the cavity has dimensions which are defined as multiples or sub-multiples of half a wavelength λ₀ which is the wavelength of the microwave radiations emitted by the microwave inlets either in air or vacuum.

In particular, the two lateral walls of the tunnel structure are arranged at a distance *d₁* comprised between 11*(λ₀/2) to 15*(λ₀/2).

The upper cover and the bottom are arranged at a distance *d₂* comprised between 13*(λ₀/2) to 15*(λ₀/2).

The conveyor belt is located at a pre-established distance h from the bottom that is an odd multiple of half the wavelength λ₀.

According to one embodiment of the invention, the microwave inlets of the first group and the microwave inlets of the second group are arranged according to an alternating distribution with respect to the conveying direction. The alternating distribution generates an overall staggered or zig-zag arrangement of microwave inlets with respect to the conveying direction.

In a first embodiment of the invention, the first group of microwave inlets and the second group of microwave inlets are arranged on the upper cover of the tunnel structure. The microwave inlets of the first group are equally spaced and the microwave inlets of the second group are equally spaced.

In this first embodiment, each microwave inlet of the first group is inclined with respect to the conveying direction so as to define a first angle α₁ comprised between 125° and 145°, and each microwave inlet of the second group is inclined with respect to the conveying direction so as to define a second angle α₂ comprised between 35° and 55°.

In particular, in this first embodiment the first angle α₁ and the second angle α₂ are supplementary angles.

In a second embodiment of the invention, the first group of microwave inlets and the second group of microwave inlets are arranged at the bottom of the tunnel structure. The microwave inlets of the first group are equally spaced and the microwave inlets of the second group are equally spaced.

In this second embodiment, each microwave inlet of the first group is inclined with respect to the conveying direction so as to define a first angle α₁ comprised between 135° and 170°, and each microwave inlet of the second group being inclined with respect to the conveying direction so as to define a second angle α₂ comprised between 10° and 45°.

In particular, in this second embodiment the first angle α₁ and the second angle α₂ are supplementary angles.

In a preferred embodiment, the first group of microwave inlets and the second group of microwave inlets are arranged on the upper cover of the tunnel structure as in the first embodiment.

In addition, in this preferred embodiment there are two additional groups of microwaves inlets arranged at the bottom of the tunnel structure, like in the second embodiment.

In practice, the preferred embodiment is a combination of the first and of the second embodiment.

Preferably, in the third embodiment the microwave inlets of the two additional groups located at the bottom are differently inclined with respect to the conveying direction in comparison to the microwave inlets of the first group and of the second group located on the upper cover.

According to one aspect of the invention, the tunnel structure comprises a plurality of openings. Each opening is configured to receive one of the microwave inlets.

Preferably, a dielectric plate is interposed between each opening and the corresponding microwave inlet.

Preferably, each dielectric plate is fitted in the corresponding opening so as to define a substantially planar surface within the cavity.

According to one embodiment of the invention, the apparatus comprises
- an upper pipe system configured to dispense steam within the cavity and arranged above the conveyor belt; and
- a lower pipe system configured to dispense steam within the cavity and arranged below the conveyor belt.

In particular, the upper pipe system comprises a main longitudinal pipe which extends substantially parallel to the conveying direction, and plurality pairs of transversal pipes branching from the main longitudinal pipe.

The transversal pipes of each pair are mutually inclined and are substantially parallel to the upper cover of the tunnel structure.

Preferably, the pairs of transversal pipes are equally spaced.

In particular, the lower pipe system comprises two parallel longitudinal pipes which extend substantially parallel to the conveying direction, and a plurality of mutually parallel transversal pipes which connect the two longitudinal pipes.

Preferably, the transversal pipes are equally spaced.

Advantageously, the lower pipe system is configured to support the conveyor belt.

For example, the apparatus comprises a plurality of parallel bars arranged parallelly to the conveying direction and placed on top of the transversal pipes. The conveyor belt is configured to rest on the top of said parallel bars.

Further characteristics and advantages of the present invention will more fully emerge from the non-limiting description of a preferred but not exclusive embodiment of an apparatus for pasteurizing food products, as illustrated in the accompanying drawings in which:

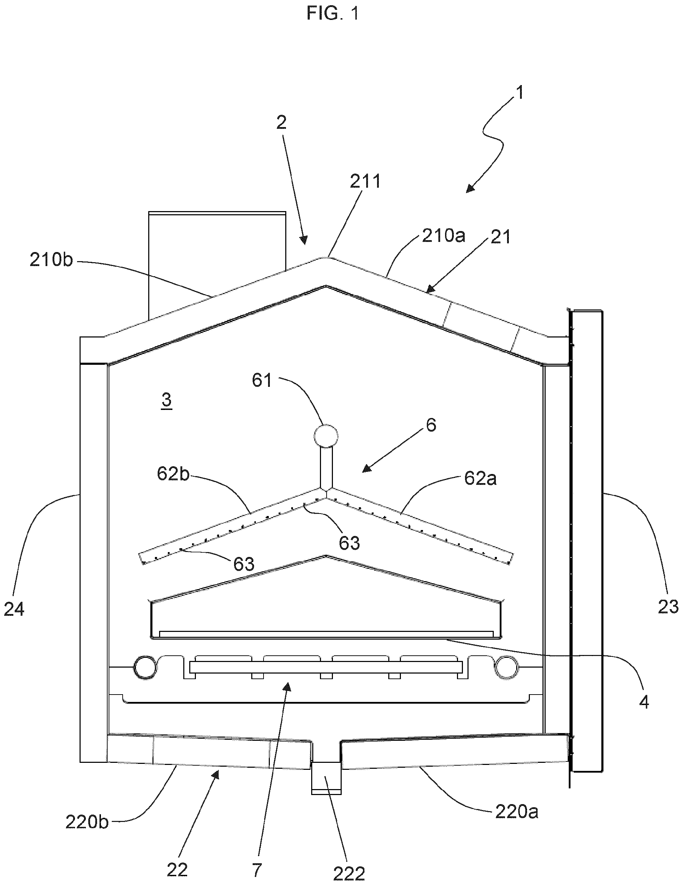

- figure 1 illustrates an apparatus for pasteurizing food products, according to the present invention, in a cross-sectional view;
- figure 2 is a schematic cross-sectional view of the tunnel structure of the apparatus of figure 1, with relevant dimensions indicated;
- figure 3 is a plan view of the upper cover of the tunnel structure of figure 1 and of the upper steam distributor;
- figure 4 is a plan view of the bottom of the tunnel structure of figure 1 and of the lower steam distributor;
- figures 5a and 5b are perspective views of the apparatus of figure 1, respectively from a top and from a bottom position;
- figure 6 is a perspective view of the upper pipe system of the apparatus of figure 1;
- figure 7 is a perspective view of the lower pipe system of the apparatus of figure 1;
- figure 8 is a zoom perspective view on parallel bars for supporting the conveyor belt of the apparatus of figure 1;
- figure 9 is a cross-sectional lateral view one of the slotted waveguides of the apparatus of figure 1;
- figure 10 is an exploded view of the slotted waveguide of figure 9 inserted in a corresponding window of the tunnel structure.

With reference to the drawings, number 1 denotes an apparatus for pasteurizing food products, shortly referred to as "apparatus".

For example, food products are fresh pasta products (either filled or not) or edible snacks for animals.

The apparatus 1 comprises a tunnel structure 2 defining at least one treating chamber or cavity, referred to with number 3.

The apparatus 1 further comprises a conveyor belt 4 for conveying the food products along a conveying direction A-A.

In particular, the conveyor belt 4 has a linear extension along an axis which is parallel to the conveying direction A-A.

In particular, the conveying direction A-A is substantially parallel to a main direction of development of the tunnel structure 2.

The conveyor belt 4 is arranged inside the tunnel structure 2 so as to pass through the cavity 3.

The conveyor belt 4 extends at least from an inlet to an outlet of the tunnel structure 2.

The conveyor belt 4 is actuated by motorized means (not illustrated).

The apparatus 1 comprises at least two groups of microwave inlets 5a, 5b configured to emit microwave radiations within the cavity 3.

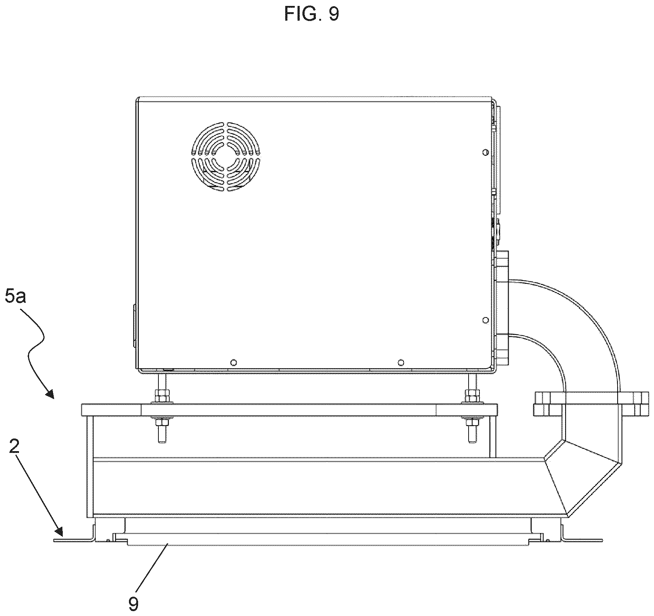

Advantageously, each microwave inlet 5a, 5b of the two groups comprises a slotted waveguide, as shown in figure 9.

The tunnel structure 2 comprises an upper cover 21, a bottom 22 and two lateral walls 23, 24.

According to one aspect of the invention, the tunnel structure 2 is made of stainless steel. In particular, the upper cover 21, the bottom 22 and the lateral walls 23, 24 are made of stainless steel.

According to one aspect of the invention, the upper cover 21 (or roof) has a triangular shape in cross-section. In particular, the upper cover 21 comprises two inclined pitches 210a, 210b which join in an upper vertex 211.

In particular, the upper cover 21 in cross-section is an isosceles triangle, with each pitch 210a, 210b being inclined of at least 15° with respect to the base of the triangle. This allows sliding of the condensation on the internal inclined pitches 210a, 210b of the upper cover 21 towards the internal lateral walls 23, 24, thus preventing drops from falling on the food products advancing below. In addition, this contributes to an easy discharge of the condensation which is collected at the bottom 22 of the tunnel structure 2. Indeed, condensation could damage the fresh pasta, producing superficial defects thereon.

In order to reduce bulkiness each pitch 210a, 210b of the upper cover 21 has a maximum inclination of 30° with respect to the base of the triangle defined by the upper cover 21.

The angle defined by each pitch 210a, 210b may also be referred to a horizontal ground G or floor on which the apparatus 1 is arranged, or to a plane parallel to said horizontal ground G.

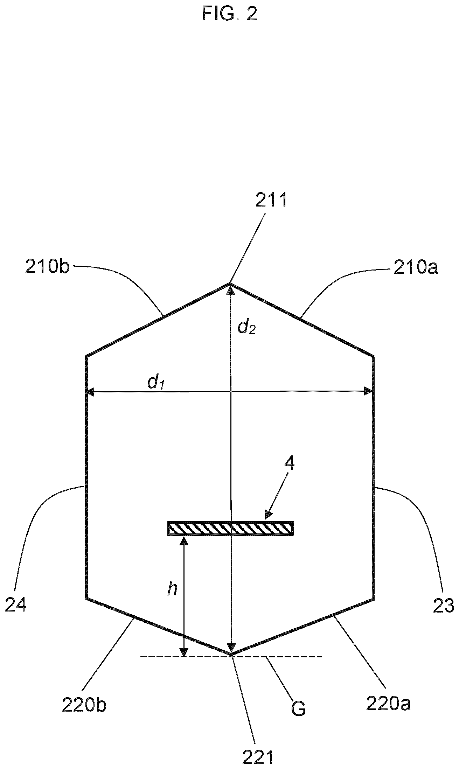

Preferably, the bottom 22 has an upside-down triangular shape in cross-section. In particular, the bottom 22 comprises two pitches 220a, 220b which are inclined downwards and ideally converges into a bottom lower vertex 221, as shown in figure 2.

Preferably, at the lower vertex 221 there is obtained a discharge 222 for collecting cleaning agents or condensation.

Advantageously, the dimensions of the tunnel structure 2 and the position of the conveyor belt 4 within the tunnel structure 2 are chosen in order to allow reflections of the microwave radiations emitted by the microwave inlets 5a, 5b so as to achieve a homogeneous treatment of the food products.

The microwave radiations emitted by the microwave inlets 5a, 5b are reflected by the stainless steel of the tunnel structure 2.

In particular, assuming as reference the wavelength λ₀ of the radiations emitted by the microwave inlets 5a, 5b (either in air or vacuum), the size of the cavity 3 is defined by multiples of half the wavelength λ₀.

According to one embodiment, the distance *d₁* between the two lateral walls 23, 24 of the tunnel structure 2 is an odd multiple of half the wavelength λ₀, which is comprised between 11 and 15.

In practice, this distance *d₁* is comprised between 11*(λ₀/2) to 15*(λ₀/2). Preferably, this distance *d₁* is 13*(λ₀/2).

According to one embodiment, the distance *d₂* between the upper vertex 211 and the lower vertex 221 of the tunnel structure 2 is an odd multiple of half the wavelength λ₀, which is comprised between 13 and 15.

In practice, this distance *d₂* is comprised between 13*(λ₀/2) to 15*(λ₀/2).

Preferably, this distance *d₂* is 13.5 *(λ₀/2).

The conveyor belt 4 is located at a pre-established distance (or height) h from the lower vertex 221. For example, the pre-established height h is an odd multiple of half the wavelength λ₀.

In a preferred embodiment, the height h is 3.5 *(λ₀/2). The pre-established height h is chosen so as to allow operation within the cavity 3, in particular for loading and unloading food products.

In particular, this position of the conveyor belt 4 within the tunnel structure 2 allows to obtain an electromagnetic field which is more intense and thus effective on the food products thereon.

According to one aspect of the invention, the distance *d1* between the two lateral walls 23, 24 of the tunnel structure 2 may be chosen in respect of the product flow and thus of the size of the conveyor belt 4.

In one embodiment of the invention, the upper cover 21 can be removed or raised for allowing maintaining and/or cleaning operations inside the tunnel structure 2.

Alternatively, the tunnel structure 2 has lateral doors obtained in one or more of the lateral walls 23, 24. Said lateral doors can be opened for accessing the cavity 3.

In one embodiment, there are only two groups of microwave inlets 5a, 5b that are referred to as a first group of microwave inlets 5a and a second group of microwave inlets 5b.

As already said, each microwave inlet 5a, 5b of the two groups comprises a slotted waveguide.

For example, the first group of microwave inlets 5a and the second group of microwave inlets 5b are arranged on the upper cover 21.

Alternatively, the first group of microwave inlets 5a and the second group of microwave inlets 5b are arranged at the bottom 22 (instead of being arranged on the upper cover 21).

In the following description, it will be assumed that the microwave inlets 5a, 5b of both the first and second group are arranged on the upper cover 21. Analogous description may be applied for their arrangement at the bottom 22.

The microwave inlets 5a of the first group are arranged in one of the pitches of the upper cover 21 (for example in pitch 210a) and the microwave inlets 5b of the second group are arranged in the other of the pitches of the upper cover 21 (for example in pitch 210b).

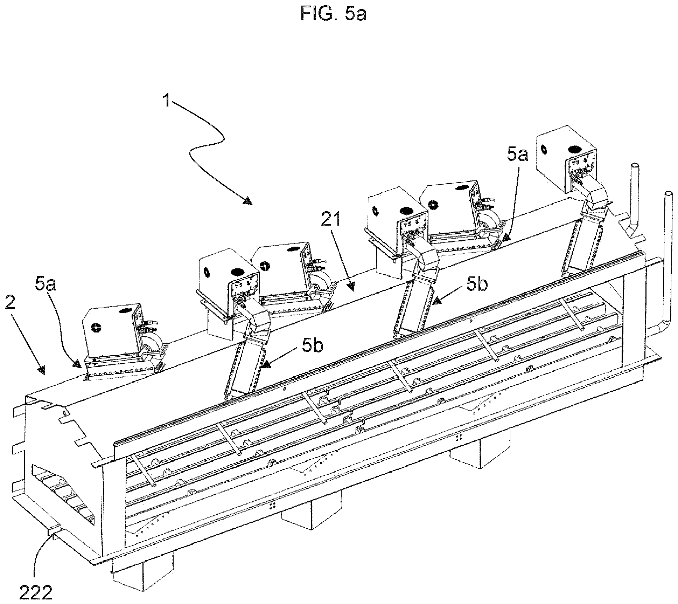

This is shown for example in figure 5a.

Preferably, the microwave inlets 5a of the first group are equally spaced in the upper cover 21.

Analogously, the microwave inlets 5b of the second group are equally spaced in the upper cover 21.

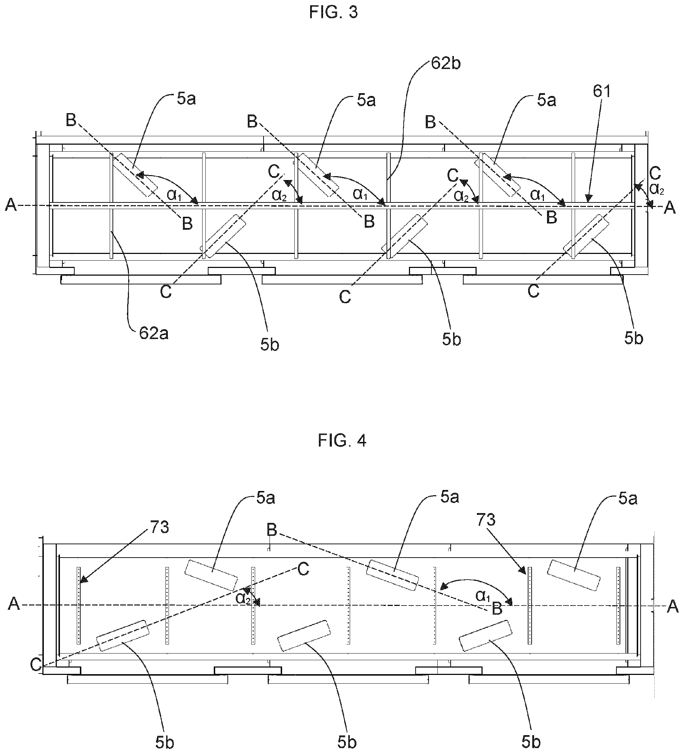

Preferably, the microwave inlets 5a of the first group and the microwave inlets 5b of the second group are arranged on the upper cover 21 according to an alternating distribution with respect to the conveying direction A-A. The alternating distribution generates an overall staggered or zig-zag arrangement of microwave inlets 5a, 5b with respect to the conveying direction A-A. This is visible for example in figure 3Advantageously, all the microwave inlets 5a of the first group are equally inclined with respect to the conveying direction A-A.

As said, the microwave inlets 5a of the first group are arranged on the pitch 210a of the upper cover 21, which in turn is inclined with respect to the horizonal ground G.

Thus, in order to better understand the inclination of the microwave inlets 5a of the first group, it is preferred to refer said inclination with respect to the projection of the upper cover 21 in plan view, like done in figure 3.

In particular, each microwave inlet 5a of the first group has an elongated development along a main axis B-B which is inclined with respect to the conveying direction A-A so as to define a first angle α₁ comprised between 125° and 145° in plan view.

All the microwave inlets 5b of the second group are equally inclined with respect to the conveying direction A-A but differently inclined with respect to the microwave inlets 5a of the first group.

As said, the microwave inlets 5b of the second group are arranged on the pitch 210b of the upper cover 21, which in turn is inclined with respect to the horizontal ground G.

Thus, the inclination of the microwave inlets 5b of the second group is also referred to the projection of the upper cover 21 in plan view, like in figure 3.

In other words, the microwave inlets 5b of the second group are oriented in the same way but differently from the orientation of the microwave inlets 5a of the first group with respect to the conveying direction A-A.

In particular, each microwave inlet 5b of the second group has an elongated development along a main axis C-C which is inclined with respect to the conveying direction A-A so as to define a second angle α₂ comprised between 35° and 55°.

Preferably, the first angle α₁ and the second angle α₂ are supplementary angles, which means their sum is 180°.

In one example, the main axis B-B of each microwave inlet 5a of the first group is perpendicular to the main axis C-C of each microwave inlet 5b of the second group.

As said, in a variant embodiment, the first group of microwave inlets 5a and the second group of microwave inlets 5b are arranged at the bottom 22 instead of being arranged on the upper cover 21.

In this variant embodiment, the microwave inlets 5a of the first group are equally spaced in the bottom 22. Analogously, the microwave inlets 5b of the second group are equally spaced in the bottom 22.

The microwave inlets 5a of the first group are arranged in one of the pitches of the bottom 22 (for example in pitch 220a) and the microwave inlets 5b of the second group are arranged in the other of the pitches of the bottom 22 (for example in pitch 220b).

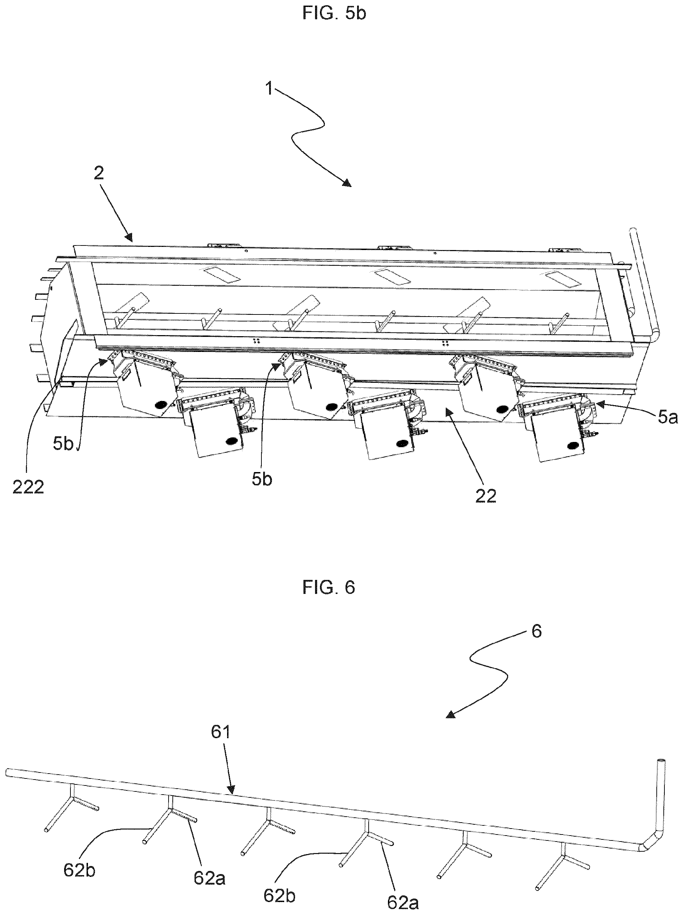

This is shown for example in figure 5b.

Preferably, the microwave inlets 5a of the first group and the microwave inlets 5b of the second group are arranged at the bottom 22 according to an alternating distribution with respect to the conveying direction A-A.

The alternating distribution generates an overall staggered or zig-zag arrangement of microwave inlets 5a, 5b with respect to the conveying direction A-A. This is visible for example in figure 4.

The alternating distribution and the different orientation of the microwave inlets 5a, 5b allow to efficiently distribute the radiations within the cavity 3.

In a preferred embodiment there are two groups of microwave inlets 5a, 5b on the upper cover 21 and there are two groups of microwaves inlets 5a, 5b at the bottom 22.

Advantageously, each microwave inlet 5a, 5b of the four groups comprises a slotted waveguide.

Preferably, the inclination angles formed by the microwave inlets 5a, 5b of the two groups located at the bottom 22 is different from the inclination angles formed by the microwave inlets 5a, 5b of the groups located on the upper cover 21.

Also, for the bottom 22 the inclination is referred to a projection of the bottom 22 in plan view, like in figure 4.

In particular, the inclination of the microwaves inlets 5a, 5b at the bottom 22 is chosen to allow the arrangement of the lower pipe system 6, as it will be explained later.

In particular, figure 3 shows the two groups of microwave inlets 5a, 5b arranged on the upper cover 21 according to the alternating distribution and inclined as already described. In figure 3 the first group comprises three microwave inlets 5a and the second group comprises three microwave inlets 5b. Nevertheless, the number of microwave inlets of both groups may vary depending on the specific needs.

Figure 4 shows the two groups of microwave inlets 5a, 5b arranged at the bottom 22 according to the alternating distribution and inclined as already described. In figure 4 the first group comprises three microwave inlets 5a and the second group comprises three microwave inlets 5b. Nevertheless, the number of microwave inlets of both groups may vary depending on the specific needs.

Preferably, it is noticed that the angles formed by microwave inlets 5a, 5b with respect to the conveying direction A-A at the bottom 22 are different from the angles formed by the microwave inlets 5a, 5b with respect to the conveying direction A-A on the upper cover 21.

This is seen by comparing figure 4 and figure 3.

Preferably, at the bottom 22 each microwave inlet 5a of the first group has an elongated development along a main axis B-B which is inclined with respect to the conveying direction A-A so as to define a first angle α₁ comprised between 135° and 170° in plan view.

Each microwave inlet 5b of the second group at the bottom 22 has an elongated development along a main axis C-C which is inclined with respect to the conveying direction A-A so as to define a second angle α₂ comprised between 10° and 45°.

Analogously to the upper cover 21, also for the microwave inlets 5a, 5b at bottom 22 the first angle α₁ and the second angle α₂ are supplementary angles, which means their sum is 180°.

In the whole apparatus 1, the number of microwave inlets is chosen so as to assure a predefined treatment rate.

First, the tunnel structure 2 and the cavity 3 are dimensioned and shaped on the basis of the food products to be pasteurized. For example, some types of food products need a longer tunnel structure 2 for completing the pasteurizing cycle.

Once the apparatus 1 has been dimensioned on the basis of the food products, the number of microwave inlets is calculated so as to match the desired treatment rate.

The speed of the conveyor belt 4 is also preferably adjusted as a function of the treatment rate.

All the microwave inlets 5a, 5b are mounted on an outer part of tunnel structure 2 in order to avoid affecting the cavity 3.

This is shown in figures 5a and 5b.

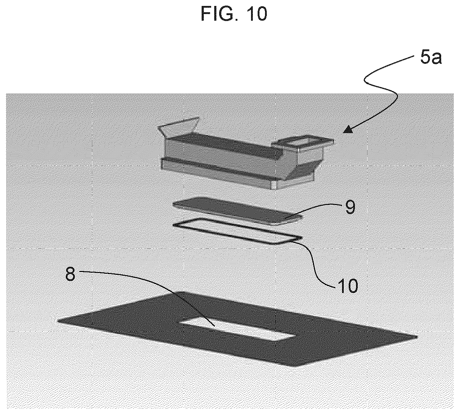

According to one aspect of the invention, in the tunnel structure 2 are obtained openings or windows 8 for receiving the microwave inlets 5a, 5b, as shown in figure 10.

In particular, the openings 8 are obtained in the upper cover 21 and/or in the bottom 22 of the tunnel structure 2.

Each opening 8 serves to receive one of the microwave inlets 5a, 5b.

In the embodiment disclosed and illustrated herewith, a dielectric plate 9 is interposed between each opening 8 and the corresponding microwave inlet 5a, 5b, which is a slotted waveguide.

Each dielectric plate 9 is fitted in the corresponding opening 8 so as to define a substantially planar surface within the cavity 3 in order to avoid interruptions, thus achieving a homogeneous and efficient field distribution.

Alternatively, the dielectric plate 9 is fitted in the corresponding opening 8 so as to protrude of circa 10 mm for favoring the water drop condensation towards the internal lateral walls 23, 24 of the tunnel structure 2. This is visible in figure 9.

Preferably, each dielectric plate 9 is integrated in the corresponding slotted waveguide 5a, 5b, which means that the dielectric plate 9 is part of the slotted waveguide 5a, 5b.

For example, the dielectric interface 9 is made of PTFE.

Preferably, a seal 10 made of silicone is provided between the opening 8 and the dielectric plate 9 in order to seal the cavity 3 from the outer environment. This achieves a hygienic design since it prevents the entrance of contaminants within the cavity 3, and at the same time it prevents the steam from entering into the slotted waveguide 5a, 5b.

According to one embodiment of the invention, illustrated herewith, the apparatus 1 further comprises means for dispensing steam 6, 7 inside the cavity 3.

The means for dispensing steam 6, 7 can be arranged above and/or below the conveyor belt 4.

Preferably, the means for dispensing steam 6, 7 comprise an upper pipe system 6 which is located above the conveyor belt 4, and a lower pipe system 7 which is located below the conveyor belt 4.

Both the upper pipe system 6 and the lower pipe system 7 are made of stainless steel.

In one embodiment, illustrated in figure 6, the upper pipe system 6 comprises a main longitudinal pipe 61 which extends substantially parallel to the conveying direction A-A and a plurality of pairs of transversal pipes 62a, 62b branching from the main longitudinal pipe 61.

In particular, the pairs of transversal pipes 62a, 62b are equally spaced along the extension of the main longitudinal pipe 61.

In each pair, the transversal pipes 62a, 62b are mutually inclined and are substantially parallel to the pitches 210a, 210b of the upper cover 21.

The transversal pipes 62a, 62b are perforated, i.e., they are provided with holes or nozzles 63 for dispensing the steam towards the food products which advance on the conveyor belt 4.

The specific configuration of the upper pipe system 6 allows to feed the steam centrally to the longitudinal pipe 61, and to distribute it evenly by means of the pairs of transversal pipes 62a, 62b.

In addition, the design of the upper pipe system 6 started from taking into account the reflecting effects that stainless steel has on the radiations emitted by the microwave inlets 5a, 5b. Indeed, the specific design of the upper pipe system 6 was developed in order to ensure that the position of the pipes does not affect the propagation of the microwave radiations, thus achieving a higher efficiency of pasteurization.

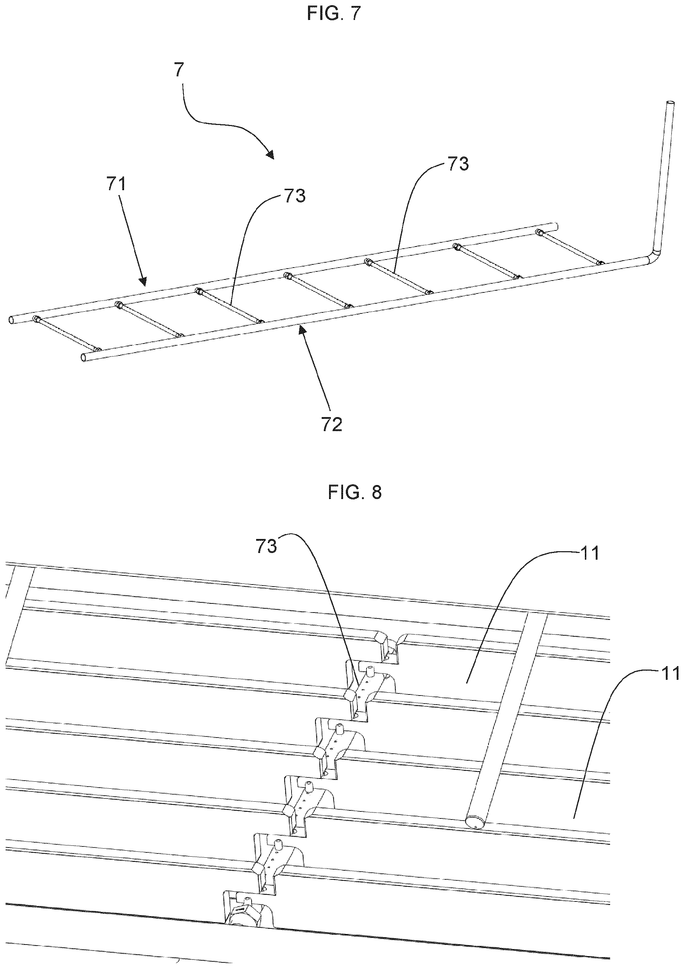

In one embodiment, illustrated in figure 7, the lower pipe system 7 comprises two parallel longitudinal pipes 71, 72 which extend substantially parallel to the conveying direction A-A.

The lower pipe system 7 further comprises and a plurality of transversal pipes 73 which are mutually parallel.

Each transversal pipe 73 connects the two longitudinal pipes 71, 72.

The transversal pipes 73 are equally spaced along the extension of the longitudinal pipes 71, 72.

The transversal pipes 73 are perforated, i.e., they are provided with holes or nozzles for dispensing the steam.

Sending steam on the food products in addition to microwave radiations is useful to reduce the cooking time that will be necessary to cook the food products once they have been pasteurized.

In case of products made of doughs (for example fresh pasta products), the steam jets allow to gelatinize the doughs.

According to one embodiment of the invention, the lower pipe system 7 is configured to support the conveyor belt 4.

Preferably, a plurality of parallel bars 11 are arranged parallelly to the conveying direction A-A and are placed on top of the transversal pipes 73. This is shown in figure 8.

The conveyor belt 4 is then rested on the top of said parallel bars 11.

For example, the parallel bars 11 are made of a plastic material, such as PFTE. The conveyor belt 4 is also made of a plastic material, such as polypropylene, or of a metal.

This installation is easily removable both for maintenance and for washing purposes.

The characteristics of the apparatus for pasteurizing food products, according to the present invention, are clear, as are the advantages.

The different orientation of the slotted waveguides and their alternating distribution with respect to the conveying direction allow to efficiently distribute the radiations within the cavity.

In addition, a more uniform treatment of food products is obtained.

The claimed invention is particularly suited for heating wet product, such as fresh pasta, since they cause water molecules to vibrate, thus generating heat. Microwave heating also reduces heating times. This is particularly beneficial for stuffed pasta products, which do not have enough time to expand, thus preserving their integrity.

The specific roof inclination of at least 15° allows sliding of the condensation on the internal inclined pitches towards the internal lateral walls, thus preventing drops from falling on the food products.

The dimensions of the tunnel structure and the inclination of the roof also contribute to reduce the amount of steam needed for the pasteurization.

## Claims

1. An apparatus (1) for pasteurizing food products, for example fresh pasta products, said apparatus (1) comprising:
- a tunnel structure (2) defining at least one cavity (3), said tunnel structure (2) comprising an upper cover (21), a bottom (22) and two lateral walls (23, 24);
- a conveyor belt (4) for conveying the food products along a conveying direction (A-A) inside the cavity (3);
- at least a first group of microwave inlets (5a) and a second group of microwave inlets (5b), the two groups of microwave inlets (5a, 5b) being configured to emit microwave radiations within the cavity (3), each microwave inlet (5a, 5b) of the two groups comprising a slotted waveguide,
wherein all the microwave inlets (5a) of the first group are equally inclined with respect to the conveying direction (A-A) and all the microwave inlets (5b) of the second group are equally inclined with respect to the conveying direction (A-A) but differently inclined with respect to the microwave inlets (5a) of the first group.

2. The apparatus (1) according to claim 1, wherein the microwave inlets (5a) of the first group and the microwave inlets (5b) of the second group are arranged according to an alternating distribution with respect to the conveying direction (A-A), said alternating distribution generating an overall staggered or zig-zag arrangement of microwave inlets (5a, 5b) with respect to the conveying direction (A-A).

3. The apparatus (1) according to claim 1 or 2, wherein each microwave inlet (5a) of the first group is inclined with respect to the conveying direction (A-A) so as to define a first angle (α₁) comprised between 125° and 145°, each microwave inlet (5b) of the second group being inclined with respect to the conveying direction (A-A) so as to define a second angle (α₂) comprised between 35° and 55°.

4. The apparatus (1) according to claim 1 or 2, wherein each microwave inlet (5a) of the first group is inclined with respect to the conveying direction (A-A) so as to define a first angle (α₁) comprised between 135° and 170°, each microwave inlet (5b) of the second group being inclined with respect to the conveying direction (A-A) so as to define a second angle (α₂) comprised between 10° and 45°.

5. The apparatus (1) according to claim 3 or 4, wherein said first angle (α₁) and said second angle (α₂) are supplementary angles.

6. The apparatus (1) according to claim 3, wherein the first group of microwave inlets (5a) and the second group of microwave inlets (5b) are arranged on the upper cover (21) of the tunnel structure (2), the microwave inlets (5a) of the first group being equally spaced and the microwave inlets (5b) of the second group being equally spaced.

7. The apparatus (1) according to claim 4, wherein the first group of microwave inlets (5a) and the second group of microwave inlets (5b) are arranged at the bottom (22) of the tunnel structure (2), the microwave inlets (5a) of the first group being equally spaced and the microwave inlets (5b) of the second group being equally spaced.

8. The apparatus (1) according to claim 6, comprising two additional groups of microwaves inlets (5a, 5b) arranged at the bottom (22) of the tunnel structure (2), the microwave inlets (5a, 5b) of the two additional groups located at the bottom (22) being differently inclined with respect to the conveying direction (A-A) in comparison to the microwave inlets (5a, 5b) of the first group and of the second group located on the upper cover (21).

9. The apparatus (1) according to any one of the preceding claims, wherein the tunnel structure (2) comprises a plurality of openings (8), each opening (8) being configured to receive one of said microwave inlets (5a, 5b), the apparatus (1) further comprising a plurality of dielectric plates (9), each of said dielectric plates (9) being interposed between one of the openings (8) and the corresponding microwave inlet (5a, 5b).

10. The apparatus (1) according to claim 9, wherein each dielectric plate (9) is fitted in the corresponding opening (8) so as to define a substantially planar surface within the cavity (3).

11. The apparatus (1) according to any one of the preceding claims, further comprising:
- an upper pipe system (6) configured to dispense steam within the cavity (3), said upper pipe system (6) being arranged above the conveyor belt (4); and
- a lower pipe system (7) configured to dispense steam within the cavity (3), said lower pipe system (7) being arranged below the conveyor belt (4).

12. The apparatus (1) according to claim 11, wherein the upper pipe system (6) comprises a main longitudinal pipe (61) which extends substantially parallel to the conveying direction (A-A), and plurality pairs of transversal pipes (62a, 62b) branching from the main longitudinal pipe (61), the pairs of transversal pipes (62a, 62b) being equally spaced, the transversal pipes (62a, 62b) of each of said pairs of transversal pipes (62a, 63b) being mutually inclined and being substantially parallel to the upper cover (21) of the tunnel structure (22).

13. The apparatus (1) according to claim 11 or 12, wherein the lower pipe system (7) comprises two parallel longitudinal pipes (71, 72) which extend substantially parallel to the conveying direction (A-A), and a plurality of mutually parallel transversal pipes (73) which connect the two longitudinal pipes (71, 72), said transversal pipes (73) being equally spaced.

14. The apparatus (1) according to claim 13, wherein the lower pipe system (7) is configured to support the conveyor belt (4).

15. The apparatus (1) according to claim 14, further comprising a plurality of parallel bars (11) arranged parallelly to the conveying direction (A-A) and placed on top of the transversal pipes (73), said conveyor belt (4) being configured to rest on the top of said parallel bars (11).

16. The apparatus (1) according to any one of the preceding claims, wherein the upper cover (21) comprises two inclined pitches (210a, 210b), each of said inclined pitches (210a, 201b) forming an angle of at least 15° with respect to a horizontal ground.

17. The apparatus (1) according to any one of the preceding claims, wherein said cavity (3) has dimensions which are defined as multiples or sub-multiples of half a wavelength λ₀ which is the wavelength of the microwave radiations emitted by the microwave inlets (5a, 5b) either in air or vacuum.

18. The apparatus (1) according to any one of the preceding claims, wherein the two lateral walls (23, 24) of the tunnel structure (2) are arranged at a distance (*d₁*) comprised between 11*(λ₀/2) to 15*(λ₀/2), the upper cover (21) and the bottom (22) being arranged at a distance (*d₂*) comprised between 13*(λ₀/2) to 15*(λ₀/2).

19. The apparatus (1) according to any one of the preceding claims, wherein the conveyor belt (4) is located at a pre-established distance (*h*) from said bottom (22) that is an odd multiple of half a wavelength λ₀ which is the wavelength of the microwave radiations emitted by the microwave inlets (5a, 5b) either in air or vacuum.
